# EUROPÄISCHE PATENTSCHRIFT

(11) **EP 0 499 962 B1**
(45) Veröffentlichungstag und Bekanntmachung des Hinweises auf die Patenterteilung: **04.09.1996**
(21) Anmeldenummer: 92102356.0
(22) Anmeldetag: 13.02.1992
(51) Int. Cl.: C04B 14/04, C04B 28/04

(54) **Wärmedämmittel für Brandschutzkonstruktionen**
Heat insulation material for fire protecting constructions
Matériau isolant thermique pour les constructions ignifugées

(30) Priorität: 18.02.1991 DE 4104967
(43) Veröffentlichungstag der Anmeldung: 26.08.1992
(73) Patentinhaber: FACHVERBAND GLASDACH-UND METALLBAU FGM e.V., D-50672 Köln (DE)
(72) Erfinder: Kujas, Detlef, W-5000 Köln 91 (DE)
(74) Vertreter: Langmaack, Jürgen, Dipl.-Ing.

(56) Entgegenhaltungen:
- DE-A- 3 324 723
- DE-C- 3 939 149
- FR-A- 2 606 651
- CHEMICAL ABSTRACTS, vol. 108, no. 6, 8. Februar 1988, Columbus, Ohio, US; abstract No. 42981Z, A. Sakae et al: "Moisure-absorbing and desorbing building materials" Seite 333; & JP-A-62 246 848
- CHEMICAL ABSTRACTS, vol. 102, no. 18, Mai 1985, Columbus, Ohio, US; abstract no. 153847F, N. F. FEDOROV ET AL: 'Zeolites as an effective additive for improving the physiomechanical properties of different cements' Seite 286 ;Spalte 1
- CHEMICAL ABSTRACTS, vol. 105, no. 8, 8. September 1986, Columbus, Ohio, US; abstract no. 84248J, H. TERAMOTO ET AL: 'Cement articles with improved resistance to bursting' Seite 345; & JP-A-6 186 480
- WORLD PATENT INDEX LATEST, Derwent Publications Ltd., LONDON, GB. Week 8309. & JP-A-53070531

## Beschreibung

Die Erfindung betrifft ein Hohlprofil für Brandschutzkonstruktionen mit einem Wärmedämmittel mit wasserspeichernden Eigenschaften.

Für Brandschutzkonstruktionen, insbesondere für Brandschutztüren, wurden ursprünglich doppelwandige, vollständig geschlossene Kastenkonstruktionen aus Metall eingesetzt, bei denen der Zwischenraum mit einem Wärmedämmittel, beispielsweise Dämmatten, Gips oder dergl., ausgefüllt war, um im Brandfalle die nötige Standzeit zu gewährleisten. Derartige Türen waren sehr massiv und genügten für den Innenausbau kaum architektonischen Ansprüchen. Mit der Entwicklung sogenannter Brandschutzgläser wurde es jedoch möglich, Türen, Trennwände oder dergl. herzustellen, die den Erfordernissen des Brandschutz genügten und mit deren Hilfe es möglich wurde, auch im Innenausbau Trennwände und Türen vorzusehen, die auch architaktonischen Gesichtspunkten genügen. Da durch die Eigenschaften des Brandschutzglases das Türblatt selbst den Erfordernissen der jeweiligen Brandschutzklasse genügt, mußte nun die metallische Rahmenkonstruktion der Trennwand und/oder der Tür in gleicher Weise feuerbeständig bzw. feuerhemmend ausgebildet sein. Das Problem besteht hierbei im wesentlichen darin, daß durch die hierzu verwendenten Hohlprofile quer zur Trennwandebene eine verhältnismäßig hohe Wärmeleitfläche vorhanden ist, so daß versucht wurde, durch einen sogenannten zweischaligen Aufbau der Rahmenkonstruktion hier eine Verbesserung der feuerhemmenden Wirkung zu erreichen. Derartige zweischalige Rahmenkonstruktionen sind jedoch verhältnismäßig schwer und erfordern einen verhältnismäßig hohen Fertigungsaufwand.

Um nun die fertigungstechnischen Vorteile eines Aufbaus aus Hohlprofilen voll ausschöpfen zu können, hat man ferner versucht, die Hohlprofile mit Gips als Wärmedämmittel auszufüllen, wobei man sich die Tatsache zunutze machen wollte, daß auch nach dem Abbinden des Gipses das im Gips enthaltene Kristallwasser bei einer Erhitzung im Brandfalle freigemacht wird und so neben der wärmedämmenden Wirkung der Gipsfüllung durch die Dampfbildung eine Verzögerung des Temperaturanstiegs auf der dem Brand abgekehrten Seite des Profils zu erreichen. Die vom Gips in Form von Kristallwasser gespeicherte Wassermenge ist jedoch sehr begrenzt, so daß die hierdurch erzielbare Wirkung verhältnismäßig gering ist.

Aus der DE-OS 33 24 723.4 ist eine verglaste Feuerschutztür bekannt, deren Hohlprofile mit einem Wärmedämmittel mit poriger Struktur ausgefüllt ist, in das mit nicht-brennbarer Flüssigkeit gefüllt Speicherkörper aus einem thermoplastischen Kunststoff eingebettet sind, deren Wandungen unter Hitzeeinfluß die Flüssigkeit in das Wärmedämmittel austreten läßt. Bei dem vorbekannten Wärmedämmittel hat sich gezeigt, daß die mit Wasser gefüllten thermoplastischen Speicherkörper in ein verhältnismäßig grobporiges Wärmedämmittel eingebettet werden müssen, um die im Brandfalle verhältnismäßig plötzlich freiwerdende Wassermenge schnell aufnehmen zu können, da nur dann sichergestellt ist, daß nicht bei plötzlicher Dampfbildung das Wärmedämmittel selbst auseinandergetrieben und damit das Hohlprofil aufgerissen wird. Aus diesem Grunde war die Einbettung derartiger wassergefüllter Speicherkörper in eine gipsgebundene Schamotteauschlämmung in gleichmäßiger Verteilung einzubringen, wobei wiederum eine derartige Schamotteaufschlämmung selbst bei Speicherkörpern von einem Durchmesser von nur wenigen Millimetern kein für eine schnelle Wasseraufnahme ausreichendes Porenvolumen aufweist. Dies ist in der notwendigen gleichmäßigen Verteilung nicht möglich und führte nicht zu befriedigenden Ergebnissen.

Aus FR-A-2 606 651 ist als wasserhaltiges Wärmedämmittel für Brandschutzkonstruktionen eine schüttfähige Mischung aus hydrophilem Siliziumoxid und einem Wasser absorbierenden Zeolith bekannt. Dieses Wärmedämmittel wird jedoch als trockenes schüttfähiges Material in das Hohlprofil eingefüllt. Zur Brandschutzwirkung soll neben der normalen Wärmedämmung aufgrund schlechter Wärmeleitfähigkeit auch das in der Kristallstruktur des Zeoliths gebundene und im Brandfall verdampfende Wasser augenutzt werden. Der Nachteil dieses Wärmedämmittels besteht jedoch darin, daß die lose Schüttung innerhalb des Hohlprofils durch etwa vorhandene Öffnungen herausrieseln kann. Dies ist insbesondere bei solchen Hohlprofilen nachteilig, die gezielt Schlitze aufweisen, die in etwa parallel zu der aus den Hohlprofilen zu errichtenden Flächenkonstruktionen verlaufen und durch die die wärmeleitenden Querschnitte der Hohlprofile vermindert werden sollen. Auch bei einem nachträglichen Anbringen von Beschlägen oder dgl. ist die Gefahr des Herausrieselns gegeben.

Der Erfindung liegt nun die Aufgabe zugrunde, ein Hohlprofil für den eingangs bezeichneten Anwendungszweck zu schaffen, das in der Handhabung einfach ist und im Brandfalle eine hohe Standzeit der betreffenden Brandschutzkonstruktion gewährleistet.

Das erfindungsgemäße Hohlprofil ist durch die im Anspruch 1 angegebenen Merkmale gekennzeichnet. Dieses Hohlprofil hat den Vorteil, daß das Wärmedämmittel mit Wasser angerührt werden kann und in die mit dem Wärmedämmittel auszufüllenden Hohlräume von Hohlprofilen einer Brandschutzkonstruktion eingegossen werden kannund damit praktisch alle Hohlräume, auch Hinterschneidungen, ausgefüllt werden. Da das Wärmedämmittel abbindet, entsteht im Hohlprofil ein fester, praktisch homogener Dämmittelkörper. Bis zur Verarbeitung ist die trockene Mischung unter gleichen Bedingungen lagerfähig wie ein üblicher Zement, wobei darüber hinaus die Möglichkeit besteht, den als schüttfähigen Zuschlagstoff verwendeten feinstporigen Zeolith und den Zement zunächst getrennt zu lagern und jeweils erst im Verarbeitungsfalle beide Komponenten miteinander zu mischen. Die Verwendung von Zeolithen bietet hierbei den Vorteil, daß sie in ihrem mineralischen Aufbau in etwa dem mineralischen Aufbau des Zements entsprechend. Zeolithe zeichnen sich ferner durch eine besonders feine Porenstruktur aus, die die Anforderungen an eine dauerhafte Bindung von Wasser unter Normaldruck und Normaltemperatur erfüllen. Der besondere Vorteil des erfindungsgemäßen Hohlprofils besteht ferner darin, daß in dem Wärmedämmittel zusätzlich zu dem durch den Zement beim Abbinden durch die Hydratisierung gebundenen Wasseranteil in dem im Zement in gleichmäßiger Verteilung vorhandenen feinstporigen Zuschlagstoff in Form von Zeolithen eine Wassermenge gebunden wird, die über den Wassermengen liegt, die üblicherweise durch Zement oder Gips beim Abbinden in Form von Kristallwasser gebunden werden können. Die Porenstruktur muß hierbei so ausgelegt sein, daß das beim Anrühren der Mischung mit Wasser von dem die Poren bildenden Gittergerüst des feinstporigen Zuschlagstoffes aufgenommenen Wassermengen bei Raumtemperatur auf Dauer in vergleichbarer Weise gehalten werden, wie der gebundene Wasseranteil im Zement. Ein mit einem derartigen Wärmedämmittel ausgefüllter Hohlraum, beispielsweise ein Hohlprofil einer verglasten Feuerschutztür, wird vollständig und dicht ausgefüllt, so daß eine optimale Wärmedämmwirkung gegeben ist. Ein weiterer Vorteil des erfindungsgemäßen Hohlprofils besteht darin, daß infolge der gleichmäßigen feinen Verteilung der Wassermenge im Brandfalle diese nicht explosionsartig sondern langsam frei wird und damit auch die gewünschte zeitliche Verzögerung im Temperaturanstieg der Brandschutzkonstruktion auf der der Hitze abgekehrten Seite erreicht wird und damit eine hohe Feuerwiderstandsfähigkeit gewährleistet ist.

In Ausgestaltung der Erfindung ist ferner vorgesehen, daß als weiterer Zuschlagstoff feinkörniges kristallines Siliziumoxid in der Mischung enthalten ist. Dieser in erster Linie als Füllmittel in der Mischung enthaltene Zuschlagstoff mit Korngrößen bis zu etwa 1 mm bewirkt ferner, daß bei einer Erhitzung des Wärmedämmittels im Brandfalle eine verhältnismäßig grobporige Struktur der Wärmedämmittelfüllung im Hohlprofil erhalten bleibt, so daß dann eine ausreichende Durchlässigkeit für den infolge der Hitzeeinwirkung sich bildenden Wasserdampfs vorhanden ist. In einer weiteren Ausgestaltung ist es ferner möglich, zusätzlich oder auch anstelle des Siliziumoxids wenigstens ein Feuerfestmaterial in die Mischung einzugeben. Hier kommen insbesondere in Betracht Schamotte, Silimanit, Vermiculit und/oder Bimskörner.

In einer vorteilhaften Ausgestaltung der Erfindung ist vorgesehen, daß der Zement aus einem Portlandzement, insbesondere einem weißen Portlandzement der Qualität PZ 45 F weiß besteht.

In bevorzugter Ausgestaltung der Erfindung ist hierbei vorgesehen, daß der feinstporige Zuschlagstoff durch synthetische Zeolithe gebildet wird. Da natürliche Vorkommen von Zeolithen oftmals nur uneinheitliche Produkte liefern, bieten synthetische Zeolithe den Vorteil einer gleichmäßigen Struktur, so daß eine vorherbestimmbare, definierte Wassermenge von dem Zeolithanteil aufgenommen wird und somit auch eine reproduzierbare Wärmewiderstandsfähigkeit gegeben ist.

In einer Ausführungsform wurde zu Versuchszwecken eine aus einem Vierkantrohr gebildete Rahmenkonstruktion verwendet, die in üblicher Konstruktionsweise Brandschutzglas hielt, das der Widerstandsklasse F 90 entsprach. Dieses Stahlhohlprofil wies auf seiner den Kanten der Brandschutzglasfüllung zugekehrten Fläche umlaufend lange Schlitze auf. Bei einem lichten Querschnitt von etwa 50 mm war der Innenraum des Hohlprofils mit einem Wärmedämmittel ausgegossen. Die Wärmedämmittelmischung hatte folgende Zusammensetzung:
- 4 Volumenteile weißer Portlandzement PZ 45 F weiß mit einer Schüttdichte von etwa 1 kg je dm³
- 3 Volumenteile eines synthetischen Zeoliths mit einem Schüttgewicht von 0,78 kg je dm³ und einer Körnung von 0,5 bis 1,0 mm
- 1 Volumenteil feiner Kristall-Quarzsand

Diese Mischung wurde mit Wasser bis zur Gießfähigkeit angerührt und in die Hohlprofile eingegossen. Das zu einem Feststoff abgebundene Wärmedämmittel in der vorstehend bezeichneten Zusammensetzung hält das Wasser in gebundener Form. Brandversuche unter den nach den Normen vorgeschriebenen Bedingungen ergaben Standzeiten, wie sie für die Klasse F 90 erforderlich sind.

Die Mischung kann bezüglich des Anteils an Zeolith variiert werden zwischen 1 und 4 Volumenanteilen. Ebenso kann der Zuschlagstoff Quarzsand variiert werden zwischen 0 und 3 Volumenanteilen, wobei der Quarzsand auch durch Feuerfestmaterialien, wie Schamotte, Silimannit, Vermiculit und/oder Bimskörper ergänzt oder ersetzt werden kann.

## Patentansprüche

1. Hohlprofil an Brandschutzkonstruktionen, wie Feuerschutztüren, Trennwände oder dergleichen, die mit einem Wärmedämmmittel mit wasserspeichernden Eigenschaften ausgegossen sind, das aus einer Mischung aus einem Zement und wenigstens einem Zuschlagstoff gebildet wird, wobei ein Zuschlagstoff aus einem schüttfähigen feinstporigen Zeolith besteht und die Mischung unter Zugabe von Wasser im Hohlprofil zu einem Feststoff abgebunden ist.

2. Hohlprofil nach Anspruch 1, dadurch gekennzeichnet, daß als weiterer Zuschlagstoff feinkörniges kristallines Siliziumoxid in der Mischung enthalten ist.

3. Hohlprofil nach Anspruch 1 oder 2, dadurch gekennzeichnet, daß als weiterer Zuschlagstoff wenigstens ein Feuerfestmaterial in der Mischung enthalten ist.

4. Hohlprofil nach Anspruch 1, 2 oder 3, dadurch gekennzeichnet, daß der Zement aus einem Portlandzement, insbesondere einem weißen Portlandzement der Qualität PZ 45 F weiß besteht.

5. Hohlprofil nach einem der Ansprüche 1 bis 4, dadurch gekennzeichnet, daß der feinstporige Zuschlagstoff durch einen synthetischen Zeolith gebildet wird.

## Claims

1. A hollow profile in fire-resistant structures, such as fire doors, partitions or the like, which are filled with a heat insulation material with water-storing properties, which material is formed of a mixture of a cement and at least one additive, in which an additive consists of a pourable, extremely fine-pored zeolite and the mixture is set into a solid in the hollow profile by the addition of water.

2. A hollow profile according to Claim 1, characterized in that fine-grained crystalline silicon oxide is contained in the mixture as an additional additive.

3. A hollow profile according to Claim 1 or 2, characterized in that at least one fireproof material is contained in the mixture as additional additive.

4. A hollow profile according to Claim 1, 2 or 3, characterized in that the cement consists of a Portland cement, in particular a white Portland cement of the quality PZ 45 F white.

5. A hollow profile according to one of Claims 1 to 4, characterized in that the extremely fine-pored additive is formed by a synthetic zeolite.

## Revendications

1. Profilé creux sur constructions pare-feu, comme des portes pare-feu, des cloisons pare-feu ou analogues, dans lesquelles on coule un matériau thermiquement isolant, qui présente des caractéristiques d'accumulation d'eau et qui est formé d'un mélange d'un ciment et d'au moins un additif, un additif étant constitué d'une zéolithe à pores très fins, pouvant couler et le mélange, avec addition d'eau dans le profilé creux, faisant prise pour donner un matériau solide.

2. Profilé selon la revendication 1, caractérisé par le fait que comme autre additif un oxyde de silicium cristallin à grain fin est contenu dans le mélange.

3. Profilé selon la revendication 1 ou 2, caractérisé par le fait que comme autre additif au moins un matériau réfractaire est contenu dans le mélange.

4. Profilé correspondant à la revendication 1, 2 ou 3, caractérisé par le fait que le ciment est constitué d'un ciment Portland, en particulier d'un ciment Portland blanc de la qualité PZ 45 F blanc.

5. Profilé creux selon l'une des revendications 1 à 4, caractérisé par le fait que l'additif à pores très fins est formé par une zéolithe synthétique.
